# EUROPEAN PATENT APPLICATION

(11) **EP 2 224 384 A1**
(43) Date of publication of application: **01.09.2010**
(21) Application number: 09153614.4
(22) Date of filing: 25.02.2009
(51) Int. Cl.: G06Q 10/00

(54) **Method and system for scheduling a manufacturing process**

(71) Applicant: Siemens Aktiengesellschaft, 80333 München (DE)
(72) Inventor: Fontanot, Paolo, 34074 Monfalcone (IT)
(74) Representative: Fischer, Michael

(57) **Abstract**

The present invention discloses a method and a system (10) for scheduling a manufacturing process planned by an Enterprise Resource Planning (ERP) and produced by equipment of a shop floor (12), wherein within a Manufacturing Executing System (MES) a production scheduler (14) is provided to schedule tasks (T1, T2) of said manufacturing process, the system comprising:
- the production scheduler (14) enabled to display the current production schedule by means of a Gantt-chart (2);
- the production scheduler (14) enabled to display in the Gantt-chart (2) for each equipment of the shop floor (12) the time periods already scheduled and those time periods still unscheduled;
- a selector for selecting for a specific equipment a time period still unscheduled;
- a query module for querying a production database (DB) for this specific equipment to find at least one task (T1, T2) that fits into the time period still unscheduled; and
- the production scheduler (14) enabled to schedule the task (T1, T2) in case of a single task found or in case of a plurality of tasks (T1, T2) found schedule at least one of the tasks found by means of a decision entered by an user interaction or by means of a decision determined automatically by a selection preference.

## Description

The present invention relates to a method and a system for scheduling a manufacturing process planned by an Enterprise Resource Planning (ERP) and produced by equipment of a shop floor, wherein within a Manufacturing Executing System (MES) a production scheduler is provided to schedule tasks of said manufacturing process

As it is well known, a method for scheduling manufacturing processes planned by an Enterprise Resource Planning (ERP) and produced by a shop floor, provides a Manufacturing Executing System (MES) for scheduling and implementing the scheduled manufacturing processes and controlling the corresponding production steps at plant floor.

In particular, the Enterprise Resource Planning (ERP) is a system including hardware devices and corresponding software applications for planning the business resources of an enterprise, i.e. material provisions, human resource managements, purchasing, orders, profits, finance, inventory controls, customer managements, etceteras, while the term "shop floor" has been used to indicate a system supporting the control of single machines involved in the manufacturing processes, for example by measuring the number of pieces produced per hour by each machine or the functioning parameters thereof, the quality of the pieces produced and so on.

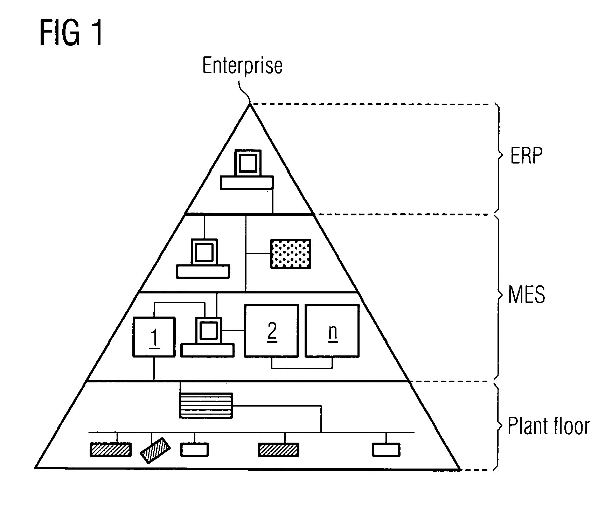

As schematically represented in figure 1, MES is an intermediate layer providing computing machines and software tools 1-n between the ERP upper layer and the shop floor lower layer, including a software tool for production order management 1, which receives requests of production from the ERP, and a software tool for production modeling 2, which supports the phases of selecting and managing the resources to be involved in the manufacturing processes, i.e. employees, machines and materials, in order to realize a planned manufacturing process within required time constrains.

Therefore, manufacturing execution systems require modeling plant equipment for both scheduling and controlling activities. Despite looking at the same set of machines, scheduling activities have different goals and can require different model approach. In this context, the words "plan" and "schedule" are used as synonyms, however the term "planning" can also be intended as a higher level activity that deals with aggregate resources and macroscopic tasks whereas "scheduling" is intended as some kind of " more detailed planning" taking into account individual resources and detailed activities. In any case, both planning and scheduling share the same Gantt-chart metaphor and can use similar interactive graphical tools.

So far, the term "interactive scheduling" is used to describe the process of building a production schedule for a plant, factory or production site by means of some interactive tools that helps the human scheduler in constructing a feasible and reliable production plan. The production operations which are to be scheduled are represented by tasks that keep busy one or more resource of the plant (e.g. machines, material, people) for a known amount of time.

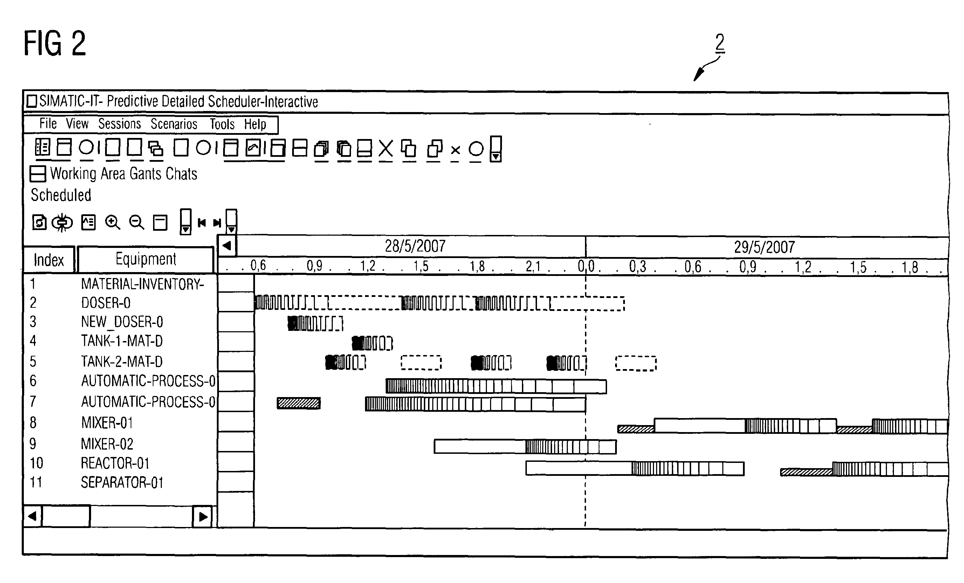

In the early days of production scheduling, big whiteboards were used. In our days, computer-based graphical tools based on the metaphor of the interactive Gantt-chart are used (compare Figure 2). Usually, such tools give to the user the ability to move on a screen, by means of a pointing device (mouse, trackball or touch-screen), the graphical objects that represent the tasks that are part of the production schedule. It is possible to have this production schedule automatically built by computer algorithm, but even in this case the human scheduler wants eventually the ability to display the resulting plan in graphical form on a Gantt-chart and to interactively execute some changes to this computer-generated schedule.

Making manual interventions on a production schedule is a rather complicated task. Even if individual changes that can be interactively performed with simple actions, like point, click and move, are straightforward, their impact on the resulting schedule can be wide and difficult to be overviewed. The goal to produce a reasonable and feasible schedule can thus be hardly to obtain for a number of reasons: production tasks can be constrained by precedence relations or by the limited availability of resources. Usually, every task can only be scheduled on a restricted subset of the available machines (or more general resource). This subset can change for each different task: a production database is used to store, for each different kind of production operation and for each different product, the details of resources such as materials, equipment and personnel involved in each single task. This complexity in some cases can be confusing and difficult to manage for a human operator, in particular when the number of tasks that are comprised in the production schedule is comparably high.

Moreover, all the existing graphical tools based on the Gantt-chart paradigm lay their main focus on the scheduled entities which are individual tasks that represent activities related to production orders. This kind of approach does not fit very well those cases in which the user is more concerned about the equipment workload rather than about the status of the production orders: the user must always move the individual tasks on the Gantt-chart in order to guarantee that some equipment is properly loaded but by shifting attention from one task to an other the focus on the equipment efficiency can be lost.

A common method to create a detailed production schedule is using an "interactive machine Gantt-chart": This is a computer-based graphical user interface (Fig. 2) where every line of the Gantt-chart represents the timeline for an specific equipment and the sequence of graphical objects displayed on each of these lines represents which tasks will be performed over time by each machine. These tasks can be assigned to the machine on the Gantt-chart by some automatic scheduling algorithm or can be manually placed one at a time by the user itself.

The user has the ability to interactively move such tasks on the Gantt-chart either horizontally (i.e. changing their position in time) or vertically (i.e. assigning the task to a different equipment). To ease the burden of verifying after each change if some unfeasible operations have been produced, some graphical tools can help the human scheduler in this action. Colors can be used for example to highlight particular conditions involving the tasks (on time tasks can be colored in green, delayed tasks can be colored in red, grey areas can represent equipment downtime periods) or icons can show the presence of specific constraints (e.g. tasks that must be fixed in some specific position).

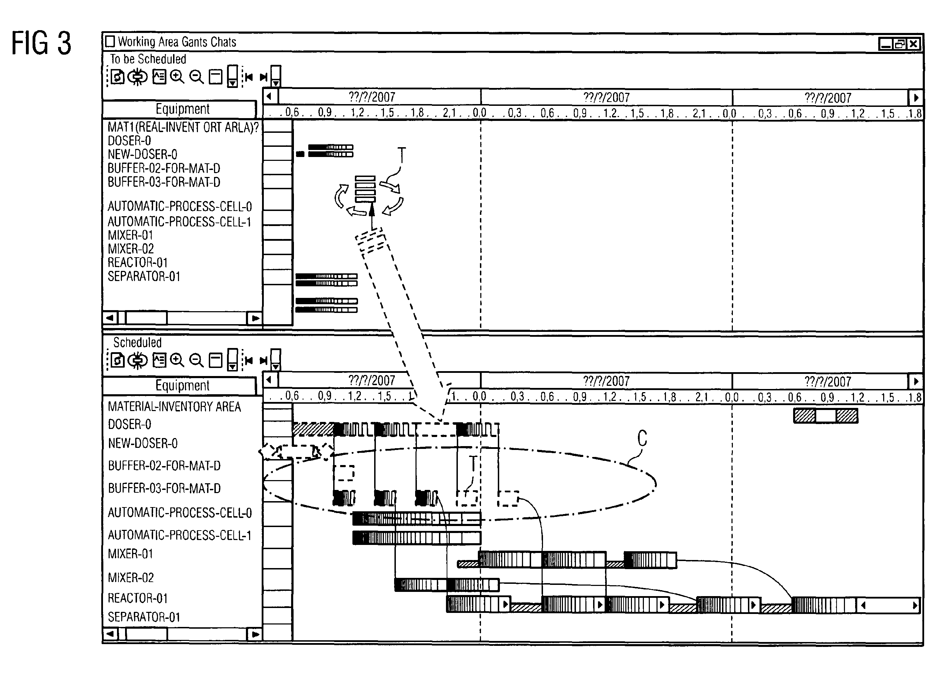

Leveraging the graphical capabilities of a computer user interface it is possible to guide the user's moves during each man-machine interaction: an example for this is realized in the interactive Gantt-chart that is part of the Siemens ® Simatic IT ® Predictive Detailed Scheduler Interactive Solution (see Figure 3). Every time the user starts moving a task on the interactive Gantt-chart, a yellow area is displayed to highlight where this specific task can be placed: the system automatically checked the timing constraints for such task and queries the production database to obtain the subset of equipment on which this specific task can be scheduled for. This information is used in the following to guide the user who, in fact following the highlighted areas, is able to quickly spot a feasible position for such task on the production schedule.

This is a tool that greatly assists the user in the construction of a production plan, but in some cases it has the disadvantage that the user must focus on the tasks to be moved: he/she has to choose first which individual task he wants to move and subsequently the tool can suggest to where it can be moved. A different kind of tool can be helpful in cases where the user has to pay attention to the workload of some specific equipment instead of following the planned production orders.

It is therefore an objective of the present invention to provide a method and a system for scheduling a production process which focus on the demand to schedule an effective and reliable production process and allow a more automated approach for the generation of the production schedule.

This objective is achieved according to the present invention with respect to the method by a method for scheduling a manufacturing process planned by an Enterprise Resource Planning (ERP) and produced by equipment of a shop floor, wherein within a Manufacturing Executing System (MES) a production scheduler is provided to schedule tasks of said manufacturing process, the method comprising the steps of:
- displaying the current production schedule by means of a Gantt-chart;
- displaying in the Gantt-chart for each equipment of the shop floor the time periods already scheduled and those time periods still unscheduled;
- selecting for a specific equipment a time period still unscheduled;
- querying a production database for this specific equipment to find at least one task that fits into the time period still unscheduled; and
- scheduling the task in case of a single task found or in case of a plurality of tasks found scheduling at least one of the tasks found by means of a decision entered by an user interaction or by means of a decision determined automatically by a selection preference.

This objective is achieved according to the present invention with respect to the system by a system for scheduling a manufacturing process planned by an Enterprise Resource Planning (ERP) and produced by equipment of a shop floor, wherein within a Manufacturing Executing System (MES) a production scheduler is provided to schedule tasks of said manufacturing process, the system comprising:
- the production scheduler enabled to display the current production schedule by means of a Gantt-chart;
- the production scheduler enabled to display in the Gantt-chart for each equipment of the shop floor the time periods already scheduled and those time periods still unscheduled;
- a selector for selecting for a specific equipment a time period still unscheduled;
- a query module for querying a production database for this specific equipment to find at least one task that fits into the time period still unscheduled; and
- the production scheduler enabled to schedule the task in case of a single task found or in case of a plurality of tasks found schedule at least one of the tasks found by means of a decision entered by an user interaction or by means of a decision determined automatically by a selection preference.

Therefore, the method and the system provide a fast way to interactively build a production schedule maintaining the focus on the Gantt-chart for a specific equipment of interest instead of focusing on specific tasks that need to be moved to build the schedule. The method and the system are also very helpful on performing local changes of the production schedule, e.g. entered at a control display for an equipment on shop floor level, where very often some gaps that need to be filled have been found in the scheduled timeline of a given equipment. For both cases, the method and the system can guarantee the opportunity of local optimization according to a set of well-known criteria and user preferences. In comparison with other known means to interactively operate the scheduling on a Gantt-chart, the user will prefer this kind of procedure focusing more on the equipment load and efficiency than on production orders. The present invention will be in particular used in favour of other known system when a "bottleneck" equipment has been identified and the user wants for example to maximize the utilization of this equipment before he would like to switch his attention to other parts of the production schedule. Further, the inventive solution also enable the human schedule to define his individual preferences on how to finally decide which task to be scheduled in a gap so far unscheduled, in particular when the query on the production database identifies more than one task that could be fit into the gap.

In a preferred embodiment of the present invention, the setting of the selection preferences is considered an advantageous contribution to the present invention. Therefore, a selection preference may be set by choosing one or a combination of the following optimizing parameters:
a) prefer a task which minimizes an estimated setup time of the specific equipment;
b) prefer a task which minimizes an estimated completion delay of the specific equipment;
c) prefer a task which has the earliest release date of the tasks found by the query; and
d) prefer a task which maximizes the machine utilization.
Depending on his actual focus, the user can identify currently his individual demands on the schedule and set the selection preference accordingly.

In a further preferred example, the selection preference can be determined by gradually evaluating each of optimizing parameters and scheduling the task which has achived the highest evaluation result as compared to the determined selection preference. This option allows the user to weight the different optimizing parameters against each other and to enable a certain fuzzy determination of the final selection preferences. Therefore, a further preferred embodiment of the present invention may provide a decision tree for the combination of the optimizing parameters thereby defining bifurcation criteria for each of the optimizing parameters.

Another preferred embodiment of the present invention may provide a further improvement on the scheduling with respect to the identification which one of the time periods unscheduled will be selected to be the next time period for which production tasks are queried in the production database. Therefore, the time periods unscheduled may be selected according to a time period selection preference. This for example may include identifying the time period selection preference by estimating the idle cost for a time period remaining unscheduled for an specific equipment.

### Brief description of the drawings

- Figure 1: schematically represents a method for managing and controlling manufacturing processes, according to the prior art;
- Figure 2: schematically represents an example of a computer-based interactive Gantt-chart according to the state-of -the-art;
- Figure 3: schematically represents an example for the Gantt-chart within the Siemens® Simatic IT® Predictive Detailed Scheduler Interactive (PDS-I) solution according to the state-of-the art;
- Figure 4: schematically represents the example of Fig. 3 now comprising the innovative solution; and
- Figure 5: schematically represents a system for scheduling a production process.

### Detailed description

A common method for creating a detailed production schedule is illustrated by a representation of an example of a computer-based interactive Gantt-chart 2. The illustrated Gantt-chart 2 is part of a not further shown computer-based graphical user interface wherein every row numbered according to Index 1 to Index 11 of the Gantt-chart 2 represents a timeline for a specific machine (see in Figure 2 under "Equipment"). The sequence of graphical objects displayed on each of these rows represents which task will be performed over time by each machine. The grey rectangles on this rows represent the task which are confirmed to be scheduled for being processed on each of the individual machines. Rectangles with dotted lines represent task proposed to be scheduled but not being yet confirmed to be scheduled. Dark bar show specific down-times of the respective machine.

Figure 3 schematically represents an example for the Gantt-chart within the Siemens® Simatic IT® Predictive Detailed Scheduler Interactive (PDS-I) solution according to the state-of-the art. The solution assists the user in placing the tasks on the timeline for each of the machine. When the user would like to move a task (and grabs the task for example by mouse-click) on the interactive Gantt-chart, the solution gives automatically a guess to the user by highlighting the feasible target positions. These feasible target positions are made visible inside a dotted circle as a bright area (e.g. yellow-coloured) that appears as soon as the user starts moving a task from the upper view for the tasks to be scheduled and disappears after the movement has been done and the task has reached the new position in the lower view for the task now scheduled. Figure 3 in particular illustrates a Gantt-chart providing separate views for "scheduled" tasks and "to be scheduled" tasks (lower and upper view resp.). In this example, a task T that was already "to be scheduled" is moved on the "scheduled" production plan. The solution highlights on the timeline for the machines that are able to process this task (here "BUFFER-01" and "BUFFER-02") the feasible time span (time period) for this specific task by means of a dotted circle C. By dropping the task T on the timeline surrounded by this circle C, the task is scheduled.

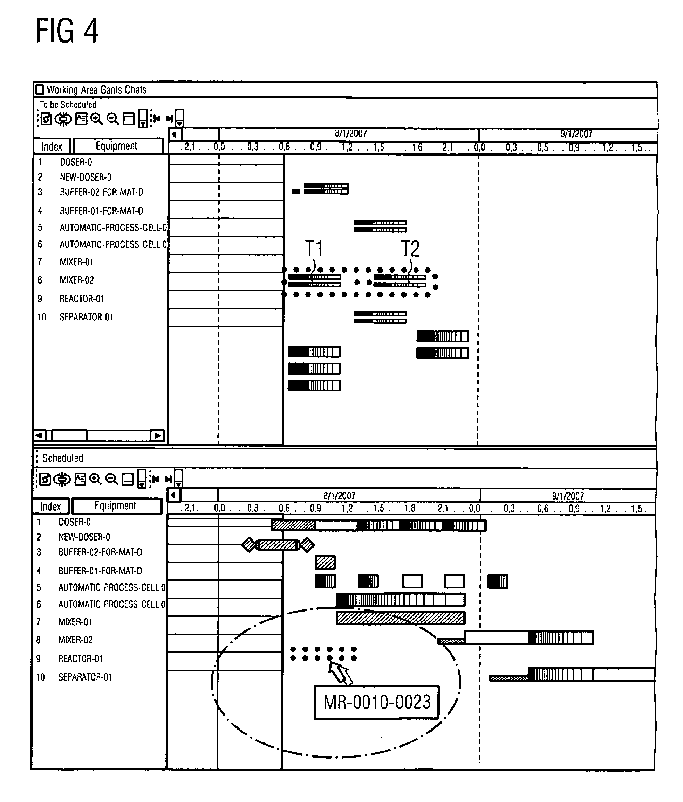

Figure 4 now schematically represents the example of Fig. 3 now incorporating the innovative solution. The solution now provides the possibility to use an usual point-and-click action to schedule tasks T1 and T2 on a specific equipment on the interactive Gantt-chart. The solution works in a rather simple and intuitive way. Once the user has activated the functionality (e.g. by means of a toolbar or by choosing an option) and then using a pointing device (mouse, trackball or touch-sensitive screen) on the Gantt-chart view, he can click on an "idle" part of a timeline for a specific machine. With this action (which could be also activated by means of an automated idle time period selection preference) the user/the solution selects a period where no tasks have yet been scheduled on this specific machine. The solution subsequently queries a production database for this specific equipment to find the task(s) best fitting into the chosen time period. The tasks T1 and T2 found by this querying step are listed in the upper "to be scheduled"-part of the Gantt-chart in Figure 4. The time period selected as well as the corresponding tasks found by the query are highlighted by a dotted circle in both the upper and the lower part of the Gantt-chart.

This dynamically created preview of the task(s) guessed best fit choice is displayed in the upper part of the Gantt-chart. By tooltip, the user can query some details about the task. The user can then either be requested to confirm this suggested best fit choice or the solution itself can confirm the task (in case of a single task found) in the lower part of Gantt-chart. In case of multiple tasks found, either the user itself can choose at least one of those tasks found or the solution itself can select by means of a predefined selection preference the at least one task best fitting into the selected idle time slot on the machine's production schedule (machine's timeline in the Gantt-chart).

By setting a selection preference it is possible to configure in a very intuitive manner the selection of the suggested "best fit" chosen task to be performed by this IT solution. An example for a set of possible criteria is discussed hereinafter. A task can be automatically chosen by the effect it has on the minimization of the estimated setup time, in other words the task causing the lowest setup time is preferred over other tasks causing more extensive setup times. The next criteria can focus on the minimization of the estimated completion delay. For this criteria the task which has the greatest completion delay is preferred over other tasks having rather smaller completion delays. Another criterium can focus on earliest release date for the respective task. Here, the task having the earliest release date is preferred over other tasks having a younger release date. Another criterium can value the machine utilization. Those tasks maximizing the machine utilization are consequentially preferred over those tasks causing a smaller machine utilization. Of course, also any reasonable combination of two or more of the aforementioned criteria can appropriate to define a selection preference for an automated or an interactive user-intuitive scheduling.

By configuring the above criteria according to the user's preference, the solution provides a way to operate changes on the production schedule ensuring the local optimality of the scheduled choices.

From the conceptual point of view the present solution can be considered as the complement of the prior art solution illustrated in Figure 3 since it acts in a symmetrical way. Such a paradigm-shift in the scheduling of tasks significantly changes now the way how user interactions or automated routines are working on the Gantt-chart, giving now the focus clearly more on the utilization of a specific equipment than this way done before by more focusing on scheduling the tasks presently listed in the "to be scheduled" section of the Gantt-chart.

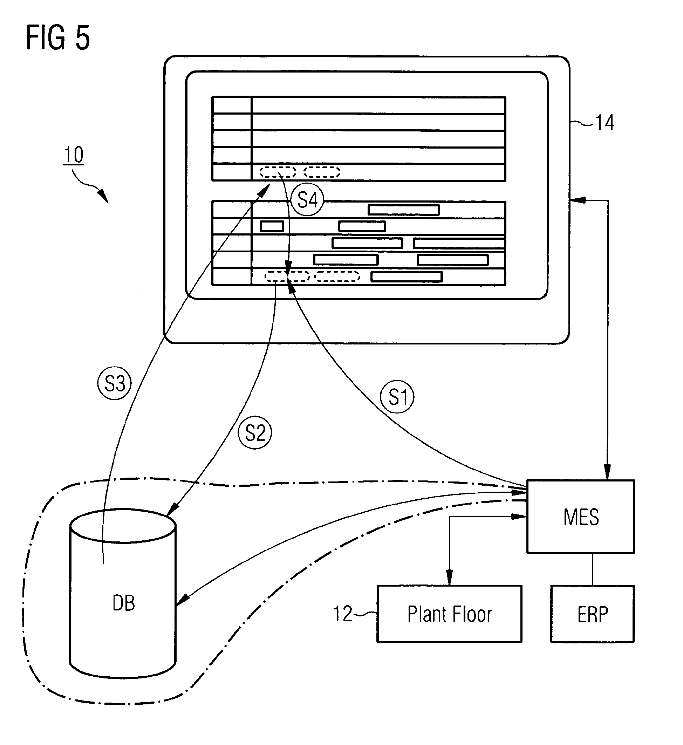

Figure 5 now schematically represents a system 10 for scheduling a production process. A manufacturing execution system MES is coupled both to the plant floor (also shop floor commonly used) 12 and an enterprise resource planning ERP. Within the manufacturing execution system a database DB is provided to store any production task derived from the production orders to be executed. Also within the manufacturing execution system MES a production scheduler workplace 14 is provided enabled to schedule the production process executed by the MES and the plant floor 12. The production scheduler workplace is more or less a normal interactive computer workplace with display and input means. The production scheduler functionality is provided by and within the manufacturing execution system by program code executed on the server (here not shown in detail) associated with the manufacturing execution system.

Scheduling can be down now either completely effected by a user or a mixture of automated and user input or completed automated by respective software routines whereas the outcome of both the automated and user input or the completely automated scheduling has to be confirmed and/or controlled and/or authorized by the user.

The focus of the method of scheduling the production process according to the present invention is here laid on the identification of a time period yet not scheduled for a specific equipment of the plant floor 12. In a first step S1, one time period yet not scheduled is selected either by user interaction or by an automated time selection preference which can for example focus on the idle cost of a specific machine. The selected time period is represented by a dotted rectangular field in the lower part of the Gantt-chart shown on the display of the scheduler workplace 14 (compare also to Figure 4) In a second step S2, the database DB is queried for any production order comprising production tasks for this specific machine. Any production task identified by this query is then in a third step S3 illustrated as dotted rectangular fields in the upper part of the Gantt-chart where the tasks to be scheduled are filled in. In a fourth step S4, the production tasks found by the query and illustrated in the upper part of the Gantt-chart are either by user interaction or automated routine by predefined selection preferences confirmed and consequentially entered into the lower part of the Gantt-chart illustrating all the tasks finally scheduled. One's this four steps have been accomplished the procedure returns to the first step S1 as long the user or the automated time period selection preference identifies still time periods which have not been yet scheduled.

Therefore, the present procedure pays attention to the demand of a more machine utilization focus rather than on the focus of the procedures along the prior art shown in Figures 2 and 3 which list the tasks not yet scheduled in order to get those tasks scheduled by user interaction. The selection preference according to the present invention delivers therefore only those tasks which presently observe the user preference with respect to the utilization of a specific machine and, of course, any possible internal preference as discussed earlier, and possible constraints which can be excluded for those tasks finally listed in the upper part of the Gantt-chart after the database query.

## Claims

1. Method for scheduling a manufacturing process planned by an Enterprise Resource Planning (ERP) and produced by equipment of a shop floor (12), wherein within a Manufacturing Executing System (MES) a production scheduler is provided to schedule tasks (T1, T2) of said manufacturing process, the method comprising the steps of:
- displaying the current production schedule by means of a Gantt-chart (2);
- displaying in the Gantt-chart for each equipment of the shop floor (12) the time periods already scheduled and those time periods still unscheduled;
- selecting for a specific equipment a time period still unscheduled;
- querying a production database (DB) for this specific equipment to find at least one task (T1, T2) that fits into the time period still unscheduled; and
- scheduling the task (T1, T2) in case of a single task found or in case of a plurality of tasks found scheduling at least one of the tasks found by means of a decision entered by an user interaction or by means of a decision determined automatically by a selection preference.

2. Method according to claim 1, further comprising the steps of:
- setting a selection preference by choosing one or a combination of the following optimizing parameters:
a) prefer a task which minimizes an estimated setup time of the specific equipment;
b) prefer a task which minimizes an estimated completion delay of the specific equipment;
c) prefer a task which has the earliest release date of the tasks found by the query; and
d) prefer a task which maximizes the machine utilization.

3. Method according to claim 1 or 2, further comprising the steps of determining the selection preference by gradually evaluating each of optimizing parameter and scheduling the task which has achieved the highest evaluation result as compared to the determined selection preference.

4. Method according to the preceding claims 2 or 3, further comprising the steps of determining a decision tree by defining bifurcation criteria for each of the optimizing parameters.

5. Method according to any of the preceding claims, further comprising the step of selecting the time periods unscheduled according to a time period selection preference.

6. Method according to claim 5, wherein the time period selection preference is identified by estimating the idle cost for a time period remaining unscheduled for an specific equipment.

7. System (10) for scheduling a manufacturing process planned by an Enterprise Resource Planning (ERP) and produced by equipment of a shop floor (12), wherein within a Manufacturing Executing System (MES) a production scheduler (14) is provided to schedule tasks (T1, T2) of said manufacturing process, the system comprising:
- the production scheduler (14) enabled to display the current production schedule by means of a Gantt-chart (2);
- the production scheduler (14) enabled to display in the Gantt-chart (2) for each equipment of the shop floor (12) the time periods already scheduled and those time periods still unscheduled;
- a selector for selecting for a specific equipment a time period still unscheduled;
- a query module for querying a production database (DB) for this specific equipment to find at least one task (T1, T2) that fits into the time period still unscheduled; and
- the production scheduler (14) enabled to schedule the task (T1, T2) in case of a single task found or in case of a plurality of tasks (T1, T2) found schedule at least one of the tasks found by means of a decision entered by an user interaction or by means of a decision determined automatically by a selection preference.

8. System according to claim 7, further comprising means for setting a selection preference by choosing one or a combination of the following optimizing parameters:
a) prefer a task which minimizes an estimated setup time of the specific equipment;
b) prefer a task which minimizes an estimated completion delay of the specific equipment;
c) prefer a task which has the earliest release date of the tasks found by the query; and
d) prefer a task which maximizes the machine utilization.

9. System according to claim 7 or 8, further comprising means for determining the selection preference by gradually evaluating each of optimizing parameter and scheduling the task which has achieved the highest evaluation result as compared to the determined selection preference.

10. System according to the preceding claims 8 or 9, further comprising means for determining a decision tree by defining bifurcation criteria for each of the optimizing parameters.

11. System according to any of the preceding claims 7 to 10, further comprising the production scheduler enabled to select the time periods unscheduled according to a time period selection preference.

12. System according to claim 11, wherein the time period selection preference is identified by estimating the idle cost for a time period remaining unscheduled for a specific equipment.
